# EUROPÄISCHE PATENTSCHRIFT

(11) **EP 1 524 868 B1**
(45) Veröffentlichungstag und Bekanntmachung des Hinweises auf die Patenterteilung: **11.05.2011**
(21) Anmeldenummer: 04023818.0
(22) Anmeldetag: 06.10.2004
(51) Int. Cl.: H04W 88/02

(54) **Funkempfänger für ein Funkübertragungssystem**
Radio receiver for a radio communication system
Récepteur de radio pour un système de radiocommunication

(30) Priorität: 09.10.2003 DE 10346900
(43) Veröffentlichungstag der Anmeldung: 20.04.2005
(73) Patentinhaber: Prof. Dr. Horst Ziegler und Partner GbR, 33100 Paderborn (DE)
(72) Erfinder: Ziegler, Horst, Prof. Dr., 33100 Paderborn (DE); Behlen, Horst, Dipl.-Ing., 33100 Paderborn (DE)
(74) Vertreter: Tiesmeyer, Johannes

(56) Entgegenhaltungen:
- EP-A- 0 901 252
- WARE C ET AL: "Simulation of capture behaviour in IEEE 802.11 radio modems" VTC FALL 2001. IEEE 54TH. VEHICULAR TECHNOLOGY CONFERENCE. PROCEEDINGS. ATLANTIC CITY, NJ, OCT. 7 - 11, 2001, IEEE VEHICULAR TECHNOLGY CONFERENCE, NEW YORK, NY : IEEE, US, Bd. VOL. 1 OF 4. CONF. 54, 7. Oktober 2001 (2001-10-07), Seiten 1393-1397, XP010562190 ISBN: 0-7803-7005-8
- ROBERTS L G: "ALOHA PACKET SYSTEM WITH AND WITHOUT SLOTS AND CAPTURE*" COMPUTER COMMUNICATION REVIEW, US, 1. April 1975 (1975-04-01), Seiten 28-43, XP000560113 ISSN: 0146-4833

## Beschreibung

Die Erfindung betrifft einen Funkempfänger für ein Funkübertragungssystem zur Übertragung von Funktelegrammen, die jeweils einen Headerteil bestimmter Modulationsfolge und einen dem Headerteil folgenden Informationsdatenteil aufweisen, wobei der Funkempfänger eine elektronische Steuereinrichtung umfasst und in einem Headeridentifizierungsmodus betreibbar ist, in dem er dazu eingerichtet ist, von ihm empfangene Funksignale mittels der Steuereinrichtung auf das Vorhandensein eines Headerteils eines Funktelegramms zu überwachen und bei Empfang eines Headerteils wenigstens einen Empfangsparameter nach Maßgabe von Eigenschaften des Headerteils einzustellen, wobei der Funkempfänger ferner dazu eingerichtet ist, auf die Identifizierung eines Headerteils hin von dem Headeridentifizierungsmodus in einen Telegrammdatenerfassungsmodus zu wechseln, um bei Beibehaltung oder allenfalls langsamer Änderung des eingestellten Empfangsparameters dem Headerteil folgende Signalereignisse als Daten des Informationsdatenteils des Funktelegramms zu erfassen, und wobei der Funkempfänger Mittel zur Bereitstellung eines die Empfangsfeldstärke repräsentierenden Empfangsfeldstärkeindizierungssignals umfasst und dazu eingerichtet ist, aus dem Telegrammdatenerfassungsmodus heraus den Headeridentifizierungsmodus erneut zu starten, sobald sich das Empfangsfeldstärkeindizierungssignal über einen Schwellwert hinaus ändert.

Die Erfindung bezieht sich insbesondere auf einen solchen Funkempfänger, der im Funkübertragungssystem mehreren Funksendern zugeordnet sein kann, welche zeitlich unsynchronisierte kurze Funktelegramme mit Binärdatenfolgen im selben Funkkanal aussenden können.

Eine solche Situation liegt z.B. bei einem bekannten Verbrauchsdatenerfassungssystem vor, bei dem mehrere Verbrauchszähler zur Messung des Verbrauchs von Versorgungsmedien, wie etwa Wasser, Gas, Strom, Heizenergie usw., in einem Wohngebäude unidirektionale Sendemodule aufweisen, die in vorzugsweise leicht variierenden Zeitabständen von einigen Sekunden bis einigen Minuten wenigstens den Zählerstand und die Zähleridentifikationsinformation des zugeordneten Zählers senden. Mehreren solcher sendenden Verbrauchszähler ist üblicherweise ein Funkempfänger der hier betrachteten Art zugeordnet. In einem größeren Mehrfamilienhaus kann z.B. ein Funkempfänger mehrere hundert solcher unidirektional sendenden Verbrauchszähler in seiner Empfangsreichweite haben, so dass wegen der hohen Kanalbelegung Funktelegramme sehr unterschiedlicher Stärke häufig kollidieren werden.

Die bei den hier betrachteten Funkübertragungssystemen gesendeten Funktelegramme sind elektromagnetische Signale mit modulierter Trägerschwingung, wobei sich die folgenden Betrachtungen primär auf binär modulierte Signale beziehen, welche zur digitalen Funkdatenübertragung nach Maßgabe eines Datenübertragungsprotokolls verwendet werden. Die Funktelegramme haben üblicherweise eine bekannte Anfangssequenz, die als Header bezeichnet wird. Oft besteht der Header aus einer längeren einfachen 0-1-0-1-Binärsequenz. Dem Header folgen im Funktelegramm üblicherweise Synchronisationsbits, die den Beginn des Nutzdatenteils markieren.

Die hier betrachteten Funkempfänger haben üblicherweise eine Steuereinrichtung, welche bei Empfang eines Funktelegramms Empfangsparameter des Funkempfängers nach Maßgabe von Eigenschaften des Headers einstellen bzw. optimieren, damit der Nutzdatenteil des Funktelegramms und vorzugsweise auch bereits die Synchronisationsbits im Zustand der optimalen Einstellung des Funkempfängers empfangen bzw. ausgewertet werden können. Bei den einstellbaren Empfangsparametern handelt es sich z.B. um die Empfängertaktrate oder/und die Empfängerverstärkung oder/und den Arbeitspunkt des Demodulationsdiskriminators des Funkempfängers oder/und die 0/1 -Schwelle für die Bitwertinterpretation.

Die Sender können die betreffenden Sendeparameter, wie etwa die Sendetaktrate und die Sendeleistung, über die typische Dauer der Aussendung eines Funktelegramms von beispielsweise 1 - 100 ms hinreichend genau konstant halten. Die im Zuge des Empfangs des Headerteils vorgenommenen Optimierungseinstellungen des Funkempfängers können über einen solch kurzen Zeitabstand während des Empfangs des Nutzdatenteils und ggf. Synchronisationsdatenteils konstant gehalten werden.

Probleme bereitet jedoch die Kollision von Funktelegrammen und somit der Mehrfachempfang von Signalen durch den Funkempfänger, und zwar insbesondere bei Funkübertragungssystemen, welche frequenz- oder phasenmodulierte Signale übertragen. Die folgende Beschreibung konzentriert sich diesbezüglich vorwiegend auf Funkübertragungssysteme, bei denen als Modulationsverfahren die Frequenzumtastung angewandt wird. Das Frequenzumtastungsverfahren wird üblicherweise als FSK-Modulation bzw. Frequency Shift Keying-Modulation bezeichnet. Die beschriebenen Grundgedanken gelten aber analog auch für viele andere frequenz- oder phasenbasierte Modulationstechniken.

Zur Demodulation derartiger FSK-modulierter Signale weist ein betreffender Funkempfänger einen Diskriminator auf, der die Abweichung der instantan empfangenen Signalfrequenz von der Sollfrequenz in eine (idealerweise lineare) Spannungsänderung am Diskriminatorausgang umsetzt. Könnte nun vorausgesetzt werden, dass die Sendermittenfrequenz, also die Trägerfrequenz des Signals und die Empfängersollfrequenz mit hoher Genauigkeit identisch sind, so könnte direkt aus dem Vorzeichen der Abweichung der empfangenen Frequenz von der Sollfrequenz auf das instantan übertragene Datenbit bzw. dessen Binärwert (0/1) geschlossen werden. Ein solcher Idealfall kann jedoch in der Praxis bei den hier betrachteten Funkübertragungssystemen nicht vorausgesetzt werden. Aus Kostengründen sind die in größeren Stückzahlen hergestellten Sender mit preisgünstigen Schwingquarzen als Taktgeberelementen ausgestattet. Solche Massenschwingquarze weisen im Rahmen ihrer relativ großen Fertigungstoleranz Resonanzfrequenzen auf, die von der Soll-Resonanzfrequenz abweichen. Üblicherweise wird auch auf Abgleichverfahren und Temperaturgangskompensation der Schwingquarze verzichtet.

Die mit solchen Schwingquarzen ausgestatteten Funksender können daher im Rahmen eines Toleranzbandes unterschiedliche Sendermittenfrequenzen aufweisen, so dass die Trägerfrequenzen der Funktelegramme dieser Sender ebenfalls im Rahmen eines Toleranzbandes unterschiedlich sein können. Diese Sendefrequenztoleranz kann bis in den Bereich des Frequenzmodulationshubs zur Nutzdatenübertragung reichen. In diesem Fall ist es wichtig, dass der Funkempfänger in der Lage ist, sich anhand des Headers eines Funktelegramms auf die jeweilige Sendermittenfrequenz einzustellen. Dies kann bekanntermaßen dadurch erfolgen, dass der Empfänger über ein RC-Glied oder ein anderes Filter den Mittelwert des analogen Demodulatorsignals, also des Ausgangssignals des Diskriminators, im bitsymmetrischen 0-1-Header bestimmt und über die diesbezügliche Zeitkonstante während des Empfangs der Nutzdaten konstant hält. Bei der üblichen 0-1-0-1...-Folge des Headers eines Funktelegramms ist dieser Mittelwert des analogen Demodulatorsignals eine die Sendermittenfrequenz, also die Signalträgerfrequenz repräsentierende Größe. Im Nutzdatenteil des Telegramms variiert dieser Mittelwert laufend je nach dem Dateninhalt und der gewählten Bitkodierung.

Die ideale 0-1-Binärwertinterpretationsschwelle sollte also während des bekannten Headers mit möglichst kleiner Zeitkonstante vom Funkempfänger bestimmt werden, damit der Funkempfänger diesbezüglich schnell einschwingen kann und nur ein kurzer Header benötigt wird. Andererseits soll die Zeitkonstante des Mittelwertfilters während der Nutzdatenübertragung möglichst groß sein, damit sich der ideale Diskriminatorreferenzwert der Trägerfrequenz nicht durch asymmetrische Bitfolgen in den Nutzdaten verstellen kann.

Um diesen divergierenden Anforderungen zu begegnen, sind Empfänger entwickelt worden, welche ihre Empfangsparameter, insbesondere den Arbeitspunkt des Demodulationsdiskriminators während des Empfangs des Headers eines Funktelegramms mit einer kurzen Zeitkonstante einstellen können, und zwar in einem sogenannten Learn-Modus oder Headeridentifizierungsmodus. Solange kein Funktelegramm den Empfänger erreicht, werden zufällige Bitfolgen empfangen. Entdeckt der Funkempfänger jedoch mittels seiner Steuerungslogik eine genügend lange Folge von Header-Daten, also eine hinreichend lange 0-1-0-1...-Bitsequenz mit Zeitintervallen im Bereich zulässiger Sendetaktraten, so speichert er in einem sogenannten Hold-Modus oder Telegrammdatenerfassungsmodus wenigstens einen für den optimalen Empfang nötigen Empfangsparameter für den Rest des Funktelegramms nach Maßgabe von Eigenschaften des Headers.

Der Funkempfänger kann die im Headeridentifizierungsmodus erfasste Referenzgröße im Telegrammdatenerfassungsmodus während der Restdauer des Funktelegramms im Wesentlichen konstant halten.

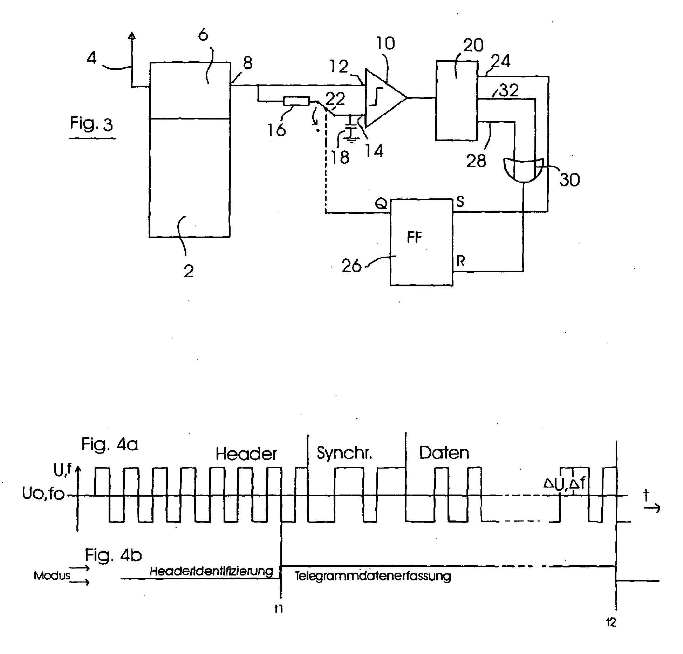

Die Speicherung kann je nach Gerätetyp auf analoge oder digitale Weise erfolgen. Überdies kann es vorgesehen sein, dass anstatt des Konstanthaltens der Referenzspannung im Telegrammdatenerfassungsmodus lediglich von der kurzen Zeitkonstanten im Headeridentifizierungsmodus auf eine längere Zeitkonstante im Telegrammdatenerfassungsmodus umgeschaltet wird, etwa unter Verwendung eines RC-Gliedes mit umschaltbarer Zeitkonstante. Ein derartiger Übergang vom Headeridentifizierungsmodus zum Telegrammdatenerfassungsmodus kann auch durch Umschaltung eines RC-Gliedes von einem Mittelwert-bildenden Modus in einen reinen Haltemodus, etwa durch Abtrennen des Eingangs des RC-Gliedes von der Signalquelle erfolgen. Ein Funkempfänger mit einem zur Einstellung des Telegrammdatenerfassungsmodus von der Signalquelle abtrennbaren RC-Glied ist in Fig. 3 schematisch dargestellt. Er weist einen Empfangsschaltkreis 2 mit einer daran angeschlossenen Antenne 4 sowie einem Demodulator 6 mit Diskriminator auf, welcher zur Demodulierung FSK-modulierter Empfangssignale dient. An dem Ausgang 8 stellt der Demodulator 6 ein Spannungssignal bereit, welches die Abweichung der momentan empfangenen Frequenz von der Trägerfrequenz fo repräsentiert. In Fig. 4a ist in einem U-t-Diagramm ein Beispiel eines Signalverlaufs am Ausgang 8 des Demodulators 6 bei Empfang eines Funktelegramms gezeigt. Das Signal in Fig. 4a ist ein Rechtecksignal, welches die Signalzustände f₀+Δf und f₀-Δf repräsentiert, wobei f₀ die ursprüngliche Trägerfrequenz und Δf den benutzten Frequenzmodulationshub bezeichnen. Diese Binärzustände des Signals entsprechen den Bit-Werten 0/1 des Funktelegramms. Die Bitsequenz des Funktelegramms beginnt mit einem Header, dem ein Synchronisationsteil und ein Nutzdatenteil folgt, wie dies in Fig. 4a angedeutet ist. Der Header ist protokollgemäß eine 0-1-0-1...-Sequenz bekannter Länge, welche zur Einstellung von Empfangsparametern genutzt werden kann. Der Synchronisationsteil dient als Marke für den Beginn des Nutzdatenteils des Funktelegramms. In der Sequenz des Nutzdatenteils sind die eigentlichen Informationen kodiert, welche Gegenstand der Informationsübertragung sind.

In Fig. 4b ist in dem Zeitmaßstab der Fig. 4a ein Zustandsdiagramm gezeigt, welches die Übergänge zwischen Headeridentifizierungsmodus und Telegrammdatenerfassungsmodus bei normalem, ungestörtem Empfang des Funktelegramms gemäß Fig. 4a zeigt.

In Fig. 3 ist an dem Demodulator 6 ein Komparator 10 angeschlossen, wobei ein Eingang 12 des Komparators 10 unmittelbar an dem Ausgang 8 des Demodulators angeschlossen ist. Der zweite Eingang 14 des Komparators 10 ist über ein RC-Glied 16, 18 mit dem Ausgang 8 des Demodulators 6 verbunden. Dem Komparator 10 nachgeschaltet ist ein Steuerlogikschaltkreis 20, welcher durch Auswertung des Ausgangssignals des Komparators 10 u.a. feststellt, ob ein gültiger Header empfangen wird, ob aktuell beim empfangenen Signal ein Fehler vorliegt oder ob das Ende eines Funktelegramms erreicht ist.

In Fig. 3 ist der Funkempfänger in dem Headeridentifizierungsmodus dargestellt, in dem der Schalter 22 geschlossen ist, so dass das RC-Glied 16, 18 das vom Demodulator 6 abgegebene Signal mitteln und das resultierende Mittelungssignal an den Eingang 14 des Komparators 10 anlegen kann. Stellt der Steuerlogikschaltkreis 20 in diesem Zustand den Empfang eines gültigen Headers fest, so gibt er über die Leitung 24 ein das Flip-Flop 26 setzendes Schaltsignal ab, woraufhin der Schalter 22 vom Flip-Flop 26 in den geöffneten Schaltzustand geschaltet wird, so dass der Kondensator 18 nunmehr von der Signalquelle getrennt ist und den aus der 0-1-0-1-Sequenz des empfangenen Headers resultierenden Mittelwert als Referenzspannung am Eingang 14 des Komparators 10 hält.

Der Funkempfänger befindet sich nun im Telegrammdatenerfassungsmodus, wobei der Empfängerarbeitspunkt auf die Trägerfrequenz des Funktelegrammübertragungssignals und somit die 0/1-Bitwertinterpretationsschwelle optimal eingestellt und bis zum Ende des Funktelegramms konserviert ist. In Fig. 4a, 4b ist dieser Wechsel vom Headeridentifizierungsmodus in den Telegrammdatenerfassungsmodus mit t₁ markiert.

Stellt der Steuerlogikschaltkreis 20 das Ende des Funktelegramms (bei t₂ in Fig. 4A, 4b) fest, so gibt er über die Leitung 28 ein von dem Oder-Gatter 30 weitergeleitetes Rücksetzsignal für das Flip-Flop 26 ab, woraufhin das Flip-Flop 26 über den Q-Ausgang den Schalter 22 in den Schaltzustand für den Headeridentifizierungsmodus zurückschaltet. In entsprechender Weise gibt der Steuerlogikschaltkreis 20 ein Rücksetzsignal für das Flip-Flop 26 über die Leitung 32 ab, falls er einen Signalfehler beim Empfang feststellt. Der Funkempfänger kann nun auf das nächste Funktelegramm warten. Auf diese Weise kann einerseits eine schnelle Adaption des Funkempfängers an die Parameter eines Telegramms eines möglicherweise anderen Funksenders erreicht werden, so dass die zeitliche Länge des Headers und damit die Belegung des Funkkanals und der mittlere Strombedarf der Sender minimiert werden können. Andererseits kommt es durch den Telegrammdatenerfassungsmodus während des Empfangs des Synchronisierungsdatenteils und des Nutzdatenteils auch bei unregelmäßigen Datenbitfolgen nicht zu unerwünschten Verschiebungen des Empfängerarbeitspunktes und somit der optimalen 0/1-Bitwertinterpretationsschwelle. Insbesondere muss dann nicht mehr zwingend eine bereits über ein oder wenige Bits gemittelt DC-freie Datenkodierung (wie z.B. die Manchester-Kodierung) gewählt werden, wodurch sich bei vorgegebener Bandbreite die erforderliche Sendedauer und damit sowohl die Belegung des Funkkanals als auch der mittlere Strombedarf der Sender für eine vorgegebene Informationsmenge weiter reduzieren lässt.

Wie bereits angesprochen, sorgt eine spezielle Synchronbitfolge zwischen dem Header und dem Nutzdatenteil des Funktelegramms für die datentechnische Markierung des Nutzdatenteilbeginns. Zur Suche dieser Markierung wird die Steuerlogik des Funkempfängers dann zunächst im sogenannten Hunt-Modus nach dieser speziellen Synchronisierungsmarkierung suchen und damit die Synchronisierung auf Bit-Byte bzw. Telegrammebene sicherstellen.

Dieser an sich bekannte Lösungsansatz hat aber bei einem Funkempfänger, dem viele örtlich verteilte Sender zugeordnet sind, folgende Nachteile. An sich soll der Funkempfänger eine hohe Empfangsempfindlichkeit aufweisen, damit er auch Sendesignale von ihm zugeordneten Nutzsendern empfangen kann, wenn diese nur schwach senden bzw. die Signale hohe Funkdämpfung, etwa durch ungünstige Mehrwege-Interferenz aufweisen. Aufgrund der hohen Empfangsempfindlichkeit kann der Funkempfänger jedoch auch Sendesignale vieler entfernter (Stör-) Sender außerhalb des eigentlich erwünschten Empfangsbereichs, z.B. einer Wohnung oder eines Gebäudes, empfangen. Nimmt die Empfangsfeldstärke wie üblich im Mittel mit dem Abstand zwischen Sender und Empfänger deutlich ab (im Freifeld z.B. im Quadrat mit der Entfernung), so nimmt andererseits statistisch die Zahl der Sender mit größerem Abstand zum Empfänger zu (z.B. bei dreidimensional konstanter mittlerer Senderdichte im Quadrat zur Entfernung). Insgesamt ergibt sich dadurch bei hoher Empfängerempfindlichkeit eine große Wahrscheinlichkeit des Empfangs von solchen unerwünschten schwachen Störsignalen fremder Sender und damit eine entsprechend hohe Kollisionsrate beim Signalempfang, was mit einem entsprechenden Datenverlust beim Empfänger einher geht.

Im Normalfall werden die von den dem Funkempfänger zugeordneten Sendern im gewünschten Empfangsbereich gesendeten Signale mit größerer Intensität am Funkempfänger ankommen als die normalerweise schwächeren Signale von weiter entfernten Fremdsendern. Sofern bei gleichzeitigem Empfang eines starken und eines schwachen Signals das stärkere Signal um 3-6 db stärker ist als das schwächere Signal, so wird bei einem Funkempfänger mit einem üblichen Demodulationsdiskriminator für FSK-modulierte Signale das schwächere Signal vollständig unterdrückt. Bei dem Beispiel nach Fig. 3 würde in einem solchen Fall von dem Diskriminator 6 am Ausgang 8 nur das Ergebnis der Demodulation des stärker empfangenen Signals zur Weiterverarbeitung abgegeben.

Dies funktioniert normalerweise immer dann, wenn der Funkempfänger zunächst das stärkere Signal empfängt und beim Empfang des stärkeren Signals nach Maßgabe von dessen Header-Informationen in den Telegrammdatenerfassungsmodus übergeht. Empfängt der Funkempfänger jedoch zunächst das schwächere Signal, so wird er bei Feststellung eines zulässigen Headers seine Empfangsparameter im Headeridentifizierungsmodus nach Maßgabe des Headers des schwachen Signals einregeln und in den Telegrammdatenerfassungsmodus wechseln. Kommt es bei dem Funkempfänger nun zum Empfang eines stärkeren Signals, so wird in der schon angesprochenen Weise das stärkere Signal unter Unterdrückung des schwächeren Signals demoduliert. Da bei der Frequenzmodulation oder der Phasenmodulation das analoge demodulierte Empfangssignal (vgl. Fig. 4a) normalerweise keine Information über die. Signalfeldstärke beim Empfang enthält, kann der Funkempfänger alleine aus dem demodulierten Empfangssignal nicht erkennen, dass der Empfang plötzlich von einem anderen (stärkeren) Signal dominiert wird. In einem solchen Kollisionsfall wird der Steuerlogikschaltkreis des Funkempfängers die Daten des stärker empfangenen Signals insbesondere im Falle einer verschiedenen Sendermittenfrequenz ggf. nicht mehr richtig dekodieren können, da der Empfänger ja im Telegrammdatenerfassungsmodus die nach Maßgabe des Headers des Funktelegramms des schwächeren Signals eingestellte Referenzspannung für die Mittenfrequenz beibehält. Der Steuerlogikschaltkreis kann dann unter Anwendung der üblichen Fehlerüberwachungsverfahren wie z.B. das CRC (Cyclic Redundancy Check) oder aufgrund des Auftretens unzulässiger Bitkodierungen normalerweise erst nach dem Empfang vieler Datenbits feststellen, dass ein Fehler aufgetreten ist. Dabei wird es zwar zu einem Fehlerabbruch und zum Umschalten des Funkempfängers in den Headeridentifizierungsmodus kommen. Bei den erwünscht kurzen Headerlängen wird jedoch der Header des Funktelegramms des stärker empfangenen Signals bereits weitgehend vorbei sein, so dass der Funkempfänger keine Möglichkeit mehr hat, sich optimal auf den Empfang des stärkeren Signals bzw. auf die Auswertung des demodulierten Signals einzustellen. Es kann somit die Situation auftreten, dass recht schwache Signale den Empfang von Funktelegrammen an sich starker Signale unmöglich machen. Bei einer großen Anzahl von entfernteren Sendern, die dem betreffenden Funkempfänger nicht zugeordnet sind, kann es somit statistisch häufig vorkommen, dass Kollisionsfälle auftreten, bei denen das Telegramm eines schwächer empfangenen Signals eines (Fremd-) Senders vor dem Funktelegramm eines stärker empfangenen Signals eines Nutzsenders auftritt und somit das an sich stärkere Signal "abfängt". Dieser Effekt wird auch als "Capture-Effekt" bezeichnet. Aufgrund dieses Capture-Effektes kann es somit dazu kommen, dass die an sich ausreichend starken Signale naher Sender durch Kollisionen mit wesentlich schwächeren Signalen von Femdsendern häufig nicht mehr korrekt empfangen werden bzw. ausgewertet werden können.

Besonders wichtig ist die Beachtung dieses Problems bei dem eingangs schon erwähnten Funksystem zur Verbrauchsdatenerfassung, bei dem mehrere Verbrauchszähler mit einem jeweiligen Sendemodul ausgestattet sind, um Zählerstandsinformationen in Zuordnung zu Zähleridentifikationsdaten zu einem Funkempfänger zu senden. Im Falle eines Mehrfamilienhauses kann bei einem solchen Verbrauchsdatenerfassungssystem der Funkempfänger bis zu mehrere hundert solcher unidirektional sendenden Verbrauchszähler in seiner Empfangsreichweite haben, so dass wegen der hohen Kanalbelegung Funktelegramme bzw. Signale sehr unterschiedlicher Stärke kollidieren können.

Ein Lösungsansatz für das vorstehend erwähnte Problem des Capture-Effektes ist es, auf den Telegrammdatenerfassungsmodus der oben erläuterten Art gänzlich zu verzichten und kontinuierlich, also auch während des Synchronisierungsteils und des Nutzdatenteils des Funktelegramms die empfangstechnischen Parameter kontinuierlich nachzuregeln. Zusätzlich kann durch Wahl einer geeigneten Bitkodierung dafür gesorgt werden, dass sich eine längere Headerbitfolge eindeutig von jeder zulässigen Bitfolge des Synchronisations- und des Nutzdatenteils unterscheidet. Die Bitdekodierung wird in diesem Falle jedoch sehr aufwendig, weil nun jeweils simultan zur Dekodierung von Nutzdaten noch die Erkennung des eventuell neuen Headers eines stärkeren Senders erfolgen muss. Auch sind die Anforderungen der simultanen Empfänger-Nachregelung und Nutzdatendekodierung sowohl datentechnisch als auch hochfrequenztechnisch schwierig zu erfüllen. Schließlich ist eine solche Bitkodierung aufwendig mit entsprechenden Folgen für die Funktelegrammlänge. Längere Funktelegramme bedeuten aber auch einen höheren Stromverbrauch des Funkübertragungssystems und eine stärkere Belegung des Funkkanals. Damit erhöht sich jedoch auch die Kollisionswahrscheinlichkeit von Funktelegrammen. Schließlich führen die sich widersprechenden Ziele einer kurzen Regelzeit des Empfängers während des Header-Empfangs (kurzer Header, geringe Funkkanalbelegung, geringer Sendestrombedarf) und einer langen Regelzeit des Empfängers während des Nutzdatenteilempfangs des Funktelegramms (Nichtbeeinflussung des Empfängerdiskriminators durch unsymmetrische Datenbitfolgen im Nutztelegramm) zu einem meist unbefriedigenden Kompromiss.

Funkempfänger und Funkübertragungssysteme der eingangs genannten Art sind grundsätzlich auch aus der EP 0 901 252 A2 bekannt. Diese Schrift offenbart ein drahtloses lokales Netzwerk (WLAN) mit verbesserter Erfassungsbereitstellung und befasst sich insbesondere mit dem Capture-Effekt. In einem normalen Betriebsmodus wird eine empfangene Nachricht verarbeitet, bis diese vollständig empfangen ist oder bis eine zweite Übertragung eintrifft, deren Signalpegel einen vorherbestimmten Schwellwert überschreitet. In diesem Fall kann der Empfänger die erste Nachricht während der Übertragung der zweiten Nachricht nicht ohne Fehler empfangen. Der Empfänger wird somit auf die neue Situation nachgeregelt, so dass die neue Nachricht empfangen werden kann, sobald die erste Nachricht beendet ist. Es finden sich jedoch keine Informationen, wie etwa der vorgenannte Schwellwert eingestellt oder seine Überschreitung überwacht werden könnte.

Ebenfalls mit dem Capture-Effekt befasst sich die Veröffentlichung "Simulation of Capture Behaviour in IEEE 802.11 Radio Modems" von Christopher Ware, Joe Chicharo and Tadeusz Wysocki in VTC Fall 2001, IEEE 54th Vehicular Technology Conference Proceedings, Atlantic City, NJ, 7.-11. Oktober 2001; IEEE New York, 2001. In ähnlicher Weise wie in der EP 0 901 252 A2 findet eine Nachregelung des Empfängers statt, wenn während des Empfangs einer ersten Nachricht ein weiteres Signal aufgenommen wird, das einer zweiten Nachricht entsprechen könnte. Durch dieses Nachregeln wird das beschriebene Modem in die Lage versetzt, die neue Nachricht zu empfangen, wenn die erste Nachricht beendet ist. Wenn die neu eintreffende Nachricht eine bestimmte Mindespegeldifferenz gegenüber der ersten Nachricht aufweist, wird mit hoher Wahrscheinlichkeit die erste Nachricht nicht mehr zu empfangen sein, so dass in diesem Fall die erste Nachricht verworfen wird und der Empfang der zweiten aufgenommen wird. Für den entsprechenden Schwellwert der Signalpegeldifferenz wird ein fester Wert zwischen 3 und 5 dB vorgeschlagen.

Ziel der vorliegenden Erfindung ist es, einen Funkempfänger der eingangs genannten Art bereitzustellen, der zur schnellen Optimierung wenigstens eines Empfangsparameters während des Empfangs des Headerteils eines Funktelegramms - und zum Halten dieses Empfangsparameters über eine hinreichend lange Zeit für den Empfang des kompletten Funktelegramms geeignet ist, nicht aber die Nachteile des potentiellen Empfangsverlustes aufgrund des Capture-Effektes aufweist. Dazu ist insbesondere eine Möglichkeit anzugeben, wie der Schwellwert zur Umschaltung in den Headeridentifizierungsmodus aus dem Telegrammdatenerfassungsmodus dynamisch nachgeführt werden kann.

Zur Lösung dieser Aufgabe umfasst der Funkempfänger eine das Empfangsfeldstärkeindizierungssignal mittelnde und den Mittelwert um einen Offsetbetrag erhöhende Schwellwertvorgabeschaltung, um den Schwellwert für die Umschaltung von dem Telegrammdatenerfassungsmodus in den Headeridentifizierungsmodus vorzugeben. Zum Zwecke der Überwachung der Umschaltbedingung ist vorzugsweise ein Komparator zum Vergleichen des von der Schwellwertvorgabeschaltung bereitgestellten Schwellwerts mit dem aktuellen Empfangsfeldstärkeindizierungssignal vorgesehen. Gemäß einer Weiterbildung der Erfindung ist die Schwellwertvorgabeschaltung dazu eingerichtet, den im Headeridentifizierungsmodus bei Empfang eines Funktelegramms ermittelten Schwellwert für die Überwachung der Umschaltbedingung im Telegrammdatenerfassungsmodus in gespeicherter Weise bereitzuhalten.

Der Erfindung liegt die Idee zugrunde, die Learn-Hold-Methode des Wechsels zwischen Headeridentifizierungsmodus und Telegrammdatenerfassungsmodus beizubehalten und zur schnellen Erkennung der Capture-Situation nicht auf die Online-Erkennung der eindeutigen Headerbitfolge des stärkeren Signals oder auf einen Fehlerabbruch zu setzen, sondern stattdessen die schnelle Zunahme der Empfangsfeldstärke um z.B. 3 - 6 db zu überwachen. Viele Empfängerbausteine bieten dazu die Ausgabe einer zum Logarithmus der momentanen Empfangsfeldstärke näherungsweise proportionalen Spannung (RSSI-Ausgangssignal) an. Bei einem FSK-modulierten Signal bleibt die Feldstärke während des meist kurzen Funktelegramms normalerweise in etwa konstant, insbesondere weil Fadingeffekte durch zeitlich variable Interferenzen langsamer ablaufen. Wird also der momentane Empfangsfeldstärkepegel mit dem über einige Bitzeiten gemittelten Empfangsfeldstärkepegel verglichen, so wird die als Vergleichsergebnis erhaltene Differenz nur mit kleiner Amplitude statistisch um null herum schwanken. Eine signifikante Änderung des Empfangsfeldstärkepegels wird somit auf den Empfang eines stärkeren Empfangs zurückzuführen sein.

Wie bereits erwähnt, ist das Empfangsfeldstärkeindizierungssignal vorzugsweise eine dem Logarithmus der momentanen Empfangsfeldstärke näherungsweise proportionale RSSI-Spannung. Wegen der logarithmischen Charakteristik des RSSI-Signals bedeutet eine Änderung dieses Signals um einen bestimmten absoluten Spannungswert stets eine bestimmte relative Änderung der Empfangsfeldstärke. Idealerweise sollte die Änderungsentdeckungsschwelle des Empfangs eines Signals mit sicherer Dominanz über das zunächst empfangene Signal etwa 3 - 6 db entsprechen. Demgemäß sollte der Funkempfänger einen Empfangs- und Diskriminatorschaltkreis aufweisen, der Empfangssignale kleinerer Feldstärke gegenüber einem Empfangssignal mit um ein bestimmtes Maß, insbesondere um 3 - 6 db größerer Empfangsfeldstärke unterdrückt, wobei der Schwellwert der Schwellwertvorgabeschaltung so dimensionierbar ist, dass er nur überschritten wird, wenn die Zunahme der Empfangsfeldstärke entsprechend mindestens 3 - 6 db beträgt. Die Mittelung und Überwachung der Empfangsfeldstärke kann auf die vorstehend genannte Weise mit analogen Elementen erfolgen. Alternativ kann im Rahmen der vorliegenden Erfindung auch ein insbesondere mikrocontrollergesteuerter Empfänger realisiert werden, der einen internen oder externen A/D-Konverter des Mikrocontrollers aufweist, mit dem er eine laufende Abfrage des aktuellen RSSI-Wertes durchführt und den aktuellen RSSI-Wert mit einem vorgegebenen Schwellwert vergleicht, der sich z.B. aus dem RSSI-Wert während des Headerempfangs oder aus einem Mittelwert zuzüglich einer additiven Konstanten zusammensetzt, wobei dieser Vergleich zur Entdeckung der Capture-Situation herangezogen wird. Bei allen diesen Varianten kann der Beginn des Empfangs eines stärkeren Signals jederzeit fast bitgenau entdeckt werden, so dass der Funkempfänger wieder mit dem Headeridentifizierungsmodus unverzüglich beginnen kann. Auf diese Weise lässt sich auch bei sehr kurzen Headern der störende Capture-Effekt sicher vermeiden.

Der während des Headerempfangs einzustellende Empfangsparameter kann in an sich bekannter Weise die Referenzspannung für die 0/1-Binärwertinterpretation der Datenbits des jeweils empfangenen Funktelegramms sein. Diese Referenzspannung ist vorzugsweise ein Mittelwert eines vom Demodulator des Funkempfängers als Ergebnis der Demodulation des Funksignals bereitgestellten und bei Empfang eines Funktelegramms der Frequenz des Funksignals zumindest näherungsweise proportionalen Demodulatorausgangssignals. Zur Erfassung des Mittelwerts ist ein dem Demodulator nachgeschaltetes Mittelwertfilter, insbesondere RC-Glied, und ein Komparator zum Vergleichen des im Headeridentifizierungsmodus vom Mittelwertfilter gebildeten Mittelwertes des Demodulatorausgangssignals mit dem momentanen Wert des Demodulatorausgangssignals im Telegrammdatenerfassungsmodus vorgesehen.

Gegenstand der Erfindung ist auch ein Funkübertragungssystem mit mehreren örtlich verteilten Funksendern zur Sendung von Funktelegrammen nach einem gemeinsamen Datenübertragungsprotokoll im gleichen Funkkanal und mit wenigstens einem Funkempfänger nach einem der beiliegenden Patentansprüche 1 - 11 zum Empfang der Funktelegramme.

Das Funkübertragungssystem ist gemäß einer bevorzugten Ausführungsform Bestandteil eines Verbrauchsdatenerfassungssystems, bei dem die Funksender Verbrauchszählern zugeordnet - und dazu eingerichtet sind, Funktelegramme mit Zählerstandsdaten in Zuordnung zu Zähleridentifikationsdaten der Verbrauchszähler zum Empfang durch den Funkempfänger zu senden.

Die Erfindung wird im Folgenden unter Bezugnahme auf die Figuren näher erläutert.
- Fig. 1: zeigt in schematischer Schaltbild-Darstellung ein ers- tes Ausführungsbeispiel eines Funkempfängers nach der Erfindung.
- Fig. 2a bis Fig. 2c: zeigt Diagramme zur Erläuterung der Arbeits- weise des Funkempfängers nach Fig. 1.
- Fig. 3: zeigt einen gattungsgemäßen Funkempfänger nach dem Stand der Technik.
- Fig. 4a und Fig. 4b: zeigen Diagramme zur Erläuterung eines Beispiels für die Bitfolge eines empfangenen Funktelegramms und den Wechsel zwischen dem Headeridentifizierungsmodus und dem Telegramm- datenerfassungsmodus bei dem Funkempfänger nach Fig. 3.

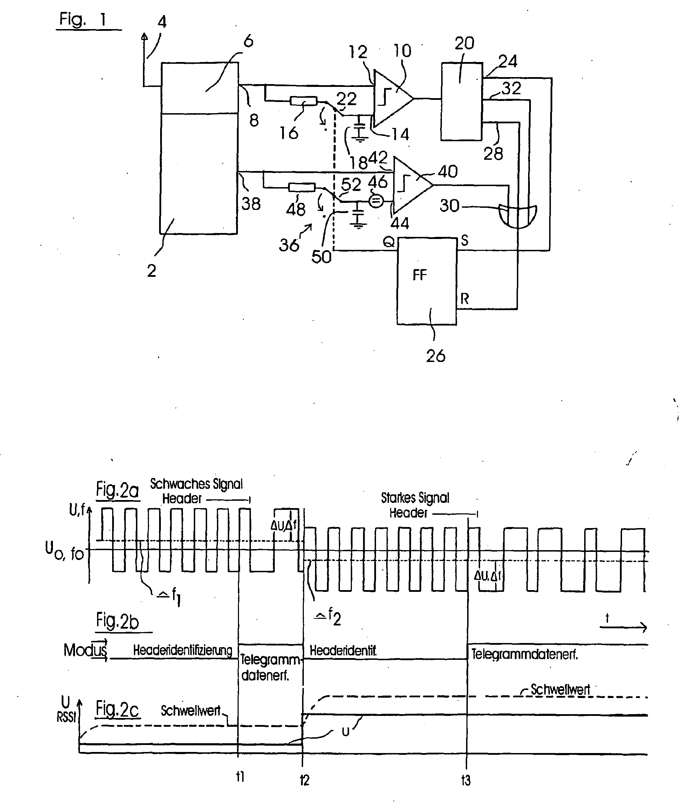

Bei dem Ausführungsbeispiel nach Fig. 1 handelt es sich um eine erfindungsgemäße Weiterentwicklung der in Fig. 3 gezeigten Ausführungsform eines Funkempfängers. Soweit die bereits unter Bezugnahme auf Fig. 3 erläuterten Elemente auch bei dem Funkempfänger gemäß Fig. 1 vorhanden sind, sind zu deren Kennzeichnung die korrespondierenden Bezugszeichen aus Fig. 3 übernommen worden.

Zusätzlich zu den Schaltungselementen nach Fig. 3 weist das Ausführungsbeispiel der Erfindung in Fig. 1 einen Schaltungsteil 36 zur Überwachung der Änderung der Empfangsfeldstärke auf. Dieser Schaltungsteil umfasst einen Komparator 40, dessen Eingang 42 unmittelbar mit einem RSSI-Ausgang 38 des Empfangsschaltkreises 2 verbunden ist. Der zweite Eingang 44 ist über eine Offset-Spannungsquelle 46 und ein RC-Glied 48, 50 mit dem RSSI-Ausgang 38 des Empfangsschaltkreises 2 verbunden. Der Empfangsschaltkreis 2 gibt an seinem RSSI-Ausgang ein von der momentanen Empfangsfeldstärke abhängiges Spannungssignal ab. Im Beispielsfall ist dieses RSSI-Spannungssignal näherungsweise dem Logarithmus der momentanen Empfangsfeldstärke proportional.

Das RC-Glied 48, 50 in dem Schaltungsteil 36 mittelt das RSSI-Signal, wobei diesem gemittelten Signal noch eine Offset-Gleichspannung der Spannungsquelle 46 überlagert wird. An dem Eingang 44 des Komparators 40 liegt somit eine Referenzspannung an, die einem Maß für die mittlere Empfangsfeldstärke am Antenneneingang des Empfangsschaltkreises 2 zuzüglich einem festen Offset entspricht. Am Eingang 42 des Komparators 40 liegt die RSSI-Spannung als Maß für die instantane Empfangsfeldstärke an. Übersteigt die Momentanspannung am Eingang 42 die Referenzspannung am Eingang 44 des Komparators 40, so gibt der Komparator 40 ein Schaltsignal zum Rücksetzen des Flip-Flops 26 ab, wodurch am Q-Ausgang des Flip-Flops 26 ein das Umschalten der Schalter 22 und 52 von dem geöffneten Zustand (Telegrammdatenerfassungsmodus) in den geschlossenen Zustand (Headeridentifizierungsmodus) überführendes Schaltsignal abgegeben wird. Dies ist genau die Voraussetzung zur Vermeidung des Capture-Effektes.

In den Fig. 2a - 2c sind Diagramme zur Erläuterung der Arbeitsweise des Funkempfängers gemäß Fig. 1 für ein Beispiel einer Funkkollisionssituation dargestellt, wobei Fig. 2a die Spannung am Ausgang 8 des Demodulators 6 wiedergibt. Das Signal U ist das Ergebnis der Demodulation des FSK-modulierten Empfangssignals und gibt somit die Abweichung der Frequenz f dieses Signals von der Trägerfrequenz (f₁ bzw. f₂ in Fig. 2a) wieder. Fig. 2b ist ein Zustandsdiagramm, welches den jeweils eingeschalteten Modus des Funkempfängers im Zeitmaßstab der Fig. 2a zeigt. In Fig. 2c ist die am Ausgang 38 des Empfängerschaltkreises 2 und am Eingang 42 des Komparators 40 anliegende RSSI-Spannung (durchgezogene Linie) und die am Eingang 44 des Komparators 40 anliegende Schwellwertspannung (unterbrochene Linie) in einem U-t-Diagramm mit dem Zeitmaßstab der Fig. 2a dargestellt.

Zur Erläuterung der Wirkungsweise des Funkempfängers nach Fig. 1 sei Folgendes angenommen. Zunächst empfängt der Funkempfänger ein relativ schwaches Signal mit einem zulässigen Funktelegrammheader. Nach Maßgabe dieses Headers baut sich eine die Mittenfrequenz des empfangenen Signals repräsentierende Referenzspannung am Eingang 14 des Komparators 10 in Fig. 1 auf. Der Steuerlogikschaltkreis 20 gibt nach Feststellung des Empfangs eines gültigen Headers über den Ausgang 24 das Schaltsignal zum Setzen des Flip-Flops 26 ab, so dass das Flip-Flop 26 dann ein die Schalter 22 und 52 in den geöffneten Schaltzustand überführendes Schaltsignal am Q-Ausgang abgibt. Der Zeitpunkt dieses Wechsels vom Headeridentifizierungsmodus (Learn-Modus) in den Telegrammdatenerfassungsmodus (Hold-Modus) ist in Fig. 2a - 2c mit t₁ bezeichnet. Die Haltekondensatoren 18 und 50 sind somit von ihren Signalquellen 8 und 38 abgetrennt, wodurch die Referenzwerte an den Komparatoren 10 und 40 im Sinne der Empfangsparameteroptimierung für den Empfang bzw. die Interpretation der Informationen des schwächeren Signals während des Synchronisationsteils und des Nutzdatenteils des Telegramms eingestellt sind. Es sei nun ferner angenommen, dass nach Beginn des Synchronisationsteils oder Nutzdatenteils des Telegramms zum Zeitpunkt t₂ in Fig. 2a - 2c ein Signal mit größerer Feldstärke am Empfangsschaltkreis 2 eintrifft, so dass die RSSI-Spannung am Eingang 42 des Komparators 40 in Fig. 1 den Referenzwert (Schwellwert) am Eingang 44 überschreitet (vgl. Fig. 2c). Es wird dann in der schon angesprochenen Weise ein Rücksetz-Schaltimpuls des Komparators 40 das Flip-Flop 26 dazu veranlassen, die Schalter 22 und 52 wieder in den geschlossenen Schaltzustand und den Funkempfänger damit wieder in den Headeridentifizierungsmodus versetzen. Es kann sich somit sofort ab Beginn des Empfangs des Headers des Nutztelegramms des stärkeren Signals ein neuer Referenzmittelwert für den Empfang bzw. die Interpretation der Signalereignisse des Nutztelegramms des stärkeren Signals am Eingang 14 des Komparators 10 aufbauen, um die Empfangsparameter nun für den Empfang dieses stärkeren Signals zu optimieren. Gleichzeitig findet auch eine Anpassung des Referenzwertes am Eingang 44 des Komparators 40 statt. Der Steuerlogikschaltkreis 20 schaltet zum Zeitpunkt t₃ in Fig. 2a - 2c den Funkempfänger dann wieder in den Telegrammdatenerfassungsmodus, so dass dann mit optimierten Empfangsparametern die Synchronisierung und Nutzdatenverarbeitung stattfinden kann.

Es ist nur im Sinne eines Beispiels gemäß Fig. 2a - 2c angenommen worden, dass das zunächst empfangene schwächere Signal eine höhere Trägerfrequenz f₁ als das stärkere Signal hat, dessen Trägerfrequenz mit f₂ bezeichnet ist. In Fig. 2a ist ferner angedeutet, dass die Trägerfrequenzen f₁ und f₂ beide von der Nennmittenfrequenz fo des Funkkanals abweichen können.

## Patentansprüche

1. Funkempfänger für ein Funkübertragungssystem zur Übertragung von Funktelegrammen, die jeweils einen Headerteil bestimmter Modulationsfolge und einen dem Headerteil folgenden Informationsdatenteil aufweisen, wobei der Funkempfänger eine elektronische Steuereinrichtung (20) umfasst und in einem Headeridentifizierungsmodus betreibbar ist, in dem er dazu eingerichtet ist, von ihm empfangene Funksignale mittels der Steuereinrichtung (20) auf das Vorhandensein eines Headerteils eines Funktelegramms zu überwachen und bei Empfang eines Headerteils wenigstens einen Empfangsparameter nach Maßgabe von Eigenschaften des Headerteils einzustellen, wobei der Funkempfänger ferner dazu eingerichtet ist, auf die Identifizierung eines Headerteils hin von dem Headeridentifizierungsmodus in einen Telegrammdatenerfassungsmodus zu wechseln, um bei Beibehaltung oder allenfalls langsamer Änderung des eingestellten Empfangsparameters dem Headerteil folgende Signalereignisse als Daten des Informationsdatenteils des Funktelegramms zu erfassen, und wobei der Funkempfänger Mittel (2, 38) zur Bereitstellung eines die Empfangsfeldstärke repräsentierenden Empfangsfeldstärkeindizierungssignals umfasst und dazu eingerichtet ist, aus dem Telegrammdatenerfassungsmodus heraus den Headeridentifizierungsmodus erneut zu starten, sobald sich das Empfangsfeldstärkeindizierungssignal über einen Schwellwert hinaus ändert,
**dadurch gekennzeichnet, dass**
der Funkempfänger eine das Empfangsfeldstärkeindizierungssignal mittelnde und den Mittelwert um einen Offsetbetrag erhöhende Schwellwertvorgabeschaltung (36) umfasst, um den Schwellwert für die Umschaltung von dem Telegrammdatenerfassungsmodus in den Headeridentifizierungsmodus vorzugeben.

2. Funkempfänger nach Anspruch 1, wobei er zum Empfang und zur Demodulation von frequenzmodulierten Funksignalen, insbesondere FSK-modulierten Funksignalen eingerichtet ist.

3. Funkempfänger nach Anspruch 1, wobei er zum Empfang und zur Demodulation von phasenmodulierten HF-Funksignalen eingerichtet ist.

4. Funkempfänger nach einem der Ansprüche 2 und 3, wobei der wenigstens eine Empfangsparameter eine Referenzspannung für die 0/1-Binärwertinterpretation der Datenbits des jeweils empfangenen Funktelegramms ist.

5. Funkempfänger nach Anspruch 4, wobei die Referenzspannung ein Mittelwert eines vom Demodulator (6) des Funkempfängers als Ergebnis der Demodulation bereitgestellten und bei Empfang eines Funktelegramms der Frequenz des Funksignals zumindest näherungsweise proportionalen Demodulatorausgangssignals ist.

6. Funkempfänger nach Anspruch 5, wobei er zur Erfassung des Mittelwertes ein dem Demodulator (6) nachgeschaltetes Mittelwertfilter (16, 18), insbesondere RC-Glied, und einen Komparator (10) zum Vergleichen des im Headeridentifizierungsmodus vom Mittelwertfilter (16, 18) gebildeten Mittelwertes des Demodulatorausgangssignals mit dem momentanen Wert des Demodulatorausgangssignals im Telegrammdatenerfassungsmodus aufweist.

7. Funkempfänger nach einem der vorhergehenden Ansprüche, wobei er zum Zwecke der Überwachung der Umschaltbedingung einen Komparator (40) zum Vergleichen des von der Schwellwertvorgabeschaltung (36) bereitgestellten Schwellwertes mit dem aktuellen Empfangsfeldstärkeindizierungssignal aufweist.

8. Funkempfänger nach einem der Ansprüche 1 bis 6, wobei die Schwellwertvorgabeschaltung (36) dazu eingerichtet ist, den im Headeridentifizierungsmodus bei Empfang eines Funktelegramms ermittelten Schwellwert für die Überwachung der Umschaltbedingung im Telegrammdatenerfassungsmodus gespeichert bereitzuhalten.

9. Funkempfänger nach einem der vorhergehenden Ansprüche, wobei das Empfangsfeldstärkeindizierungssignal eine dem Logarithmus der momentanen Empfangsfeldstärke proportionale RSSI-Spannung ist.

10. Funkempfänger nach einem der vorhergehenden Ansprüche, wobei er einen Empfangs-und Diskriminatorschaltkreis (2,6) aufweist, der Empfangssignale kleinerer Feldstärke gegenüber einem Empfangssignal mit um ein bestimmtes Maß , insbesondere um 3-6db größerer Empfangsfeldstärke unterdrückt.

11. Funkempfänger nach einem der vorhergehenden Ansprüche, wobei der Schwellwert so dimensionierbar ist, dass er nur überschritten wird, wenn die Zunahme der Empfangsfeldstärke mindestens 3-6db beträgt.

12. Funkübertragungssystem mit mehreren örtlich verteilten Funksendern zur Sendung von Funktelegrammen im gleichen Funkkanal und mit wenigstens einem Funkempfänger nach einem der vorhergehenden Ansprüche zum Empfang der Funktelegramme.

13. Funkübertragungssystem nach Anspruch 12, wobei es Bestandteil eines Verbrauchsdatenerfassungssystems ist, bei dem die Funksender Verbrauchszählern zugeordnet- und dazu eingerichtet sind, Funktelegramme mit Zählerstandsdaten in Zuordnung zu Zähleridentifikationsdaten der Verbrauchszähler zum Empfang durch den Funkempfänger zu senden.

## Claims

1. A radio receiver for a radio transmission system for the transmission of radio messages which in each case have a header portion of given modulation sequence and an information data portion following the header portion, wherein the radio receiver comprises an electronic control device (20) and can be operated in a header identification mode, in which it is set up to monitor radio signals received by it by means of the control device (20) for the presence of a header portion of a radio message and upon receiving a header portion to set at least one reception parameter according to the properties of the header portion, wherein the radio receiver is also set up, for the identification of a header portion, to change from the header identification mode into a message data detection mode so that, with the set reception parameter being maintained or at most slowly varied, signal events following the header portion are detected as data of the information data portion of the radio message, and wherein the radio receiver comprises means (2,38) for providing a received field strength indexing signal representing the received field strength and is set up to restart the header identification mode from the message data detection mode as soon as the received field strength indexing signal varies beyond a threshold value, **characterised in that** the radio receiver comprises a threshold value defaulting circuit (36) averaging the received field strength indexing signal and increasing the average value by an offset amount so as to preset the threshold value for switching from the message data detection mode into the header identification mode.

2. A radio receiver according to Claim 1, wherein it is set up to receive and demodulate frequency-modulated radio signals, in particular FSK-modulated radio signals.

3. A radio receiver according to Claim 1, wherein it is set up to receive and demodulate phase-modulated HF radio signals.

4. A radio receiver according to one of Claims 2 and 3, wherein the at least one reception parameter is a reference voltage for the 0/1 binary value interpretation of the data bits of the respectively received radio message.

5. A radio receiver according to Claim 4, wherein the reference voltage is an average value of a demodulator output signal which is provided by the demodulator (6) of the radio receiver as the result of the demodulation and which, upon reception of a radio message, is at least approximately proportional to the frequency of the radio signal.

6. A radio receiver according to Claim 5, wherein to detect the average value it has an average value filter (16,18), in particular an RC element, connected to the output side of the demodulator (6), and a comparator (10) for comparing the average value of the demodulator output signal formed by the average value filter (16,18) in the header identification mode with the instantaneous value of the demodulator output signal in the message data detection mode.

7. A radio receiver according to any one of the preceding Claims, wherein for the purpose of monitoring the switch-over condition it has a comparator (40) for comparing the threshold value provided by the threshold value defaulting circuit (36) with the current received field strength indexing signal.

8. A radio receiver according to any one of Claims 1 to 6, wherein the threshold value defaulting circuit (36) is set up to keep stored the threshold value, which is detected in the header identification mode upon reception of a radio message, for monitoring the switch-over condition in the message data detection mode.

9. A radio receiver according to any one of the preceding Claims, wherein the received field strength indexing signal is an RSSI voltage proportional to the logarithm of the instantaneous received field strength.

10. A radio receiver according to any one of the preceding Claims, wherein it has a receiving and discriminator circuit (2,6) which suppresses received signals of lower field strength in relation to a received signal with a received field strength which is higher by a given extent, in particular 3-6 dB.

11. A radio receiver according to any one of the preceding Claims, wherein the threshold value can be calculated so that it is only exceeded when the increase in the received field strength amounts to at least 3-6 dB.

12. A radio transmission system with a plurality of locally distributed radio transmitters for transmitting radio messages in the same radio channel and with at least one radio receiver according to any one of the preceding Claims for the reception of the radio messages.

13. A radio transmission system according to Claim 12, wherein it is a component of a consumption data detection system, in which the radio transmitter is associated with consumption meters and is set up to transmit radio messages with meter reading data in association with meter identification data of the consumption meters for reception by the radio receivers.

## Revendications

1. Récepteur radioélectrique pour un système de radiotransmission destiné à transmettre des radiotélégrammes, qui comportent chacun une partie en-tête d'une séquence de modulation définie et une partie données d'informations suivant la partie en-tête, le récepteur radioélectrique comportant un dispositif de commande électronique (20) et pouvant être exploité dans un mode 'identification d'en-tête' dans lequel il est agencé pour surveiller la présence d'une partie en-tête d'un radiotélégramme par des signaux reçus qu'il reçoit au moyen du dispositif de commande (20) et, en cas de réception d'une partie en-tête, pour régler un paramètre de réception conformément aux propriétés de la partie en-tête, le récepteur radioélectrique étant en outre agencé, lors de l'identification d'une partie en-tête, pour passer du mode 'identification d'en-tête' à un mode 'détection de données de télégramme' afin de détecter, en cas de maintien ou éventuellement de changement lent du paramètre de réception réglé, des événements de signaux suivant la partie en-tête en tant que données de la partie données d'informations du radiotélégramme, et sachant que le récepteur radioélectrique comporte des moyens (2, 38) pour fournir un signal d'indexation d'intensité de champ de réception représentant l'intensité de champ de réception et qu'il est agencé pour démarrer de nouveau le mode 'identification d'en-tête' à partir du mode 'détection de données de télégramme' dès que le signal d'indexation d'intensité de champ de réception se modifie au-delà d'une valeur de seuil,
**caractérisé en ce que**
le récepteur radioélectrique comporte un circuit de prédéfinition de valeur de seuil (36) calculant la moyenne du signal d'indexation d'intensité de champ de réception et augmentant la valeur moyenne d'un montant de décalage afin de prédéfinir la valeur de seuil pour la commutation du mode 'détection de données de télégramme' au mode 'identification d'en-tête'.

2. Récepteur radioélectrique selon la revendication 1, **caractérisé en ce qu'**il est agencé pour la réception et la démodulation de signaux radioélectriques modulés en fréquence, en particulier des signaux radioélectriques à modulation par déplacement de fréquence.

3. Récepteur radioélectrique selon la revendication 1, **caractérisé en ce qu'**il est agencé pour la réception et la démodulation de signaux radioélectriques hautes fréquences modulés en phase.

4. Récepteur radioélectrique selon une des revendications 2 et 3, **caractérisé en ce que** le ou les paramètres de réception est/sont une tension de référence servant à l'interprétation des valeurs binaires 0/1 des bits de données de chaque radiotélégramme reçu.

5. Récepteur radioélectrique selon la revendication 4, **caractérisé en ce que** la tension de référence est une valeur moyenne d'un signal de sortie du démodulateur délivré par le démodulateur (6) du récepteur radioélectrique en tant que résultat de la démodulation et, en cas de réception d'un radiotélégramme, un signal de sortie du démodulateur au moins approximativement proportionnel à la fréquence du signal radioélectrique.

6. Récepteur radioélectrique selon la revendication 5, **caractérisé en ce que**, pour détecter la valeur moyenne, il comporte un filtre de valeur moyenne (16, 18), en particulier un élément RC, monté derrière le démodulateur (6), et un comparateur (10) destiné à comparer la valeur moyenne du signal de sortie du démodulateur, formée en mode 'identification d'en-tête' par le filtre de valeur moyenne (16, 18), avec la valeur momentanée du signal de sortie du démodulateur dans le mode 'détection de données de télégramme'.

7. Récepteur radioélectrique selon l'une quelconque des revendications précédentes, **caractérisé en ce que**, à des fins de surveillance de la condition de commutation, il comporte un comparateur (40) destiné à comparer la valeur de seuil fournie par le circuit de prédéfinition de valeur de seuil (36) avec le signal actuel d'indexation d'intensité de champ de réception.

8. Récepteur radioélectrique selon une des revendications 1 à 6, **caractérisé en ce que** le circuit de prédéfinition de valeur de seuil (36) est agencé pour garder en mémoire la valeur de seuil, déterminée dans le mode 'identification d'en-tête' lors de la réception d'un radiotélégramme, pour la surveillance de la condition de commutation dans le mode 'détection de données de télégramme'.

9. Récepteur radioélectrique selon l'une quelconque des revendications précédentes, le signal d'indexation d'intensité de champ de réception étant une tension RSSI proportionnelle au logarithme de l'intensité momentanée du champ de réception.

10. Récepteur radioélectrique selon l'une quelconque des revendications précédentes, **caractérisé en ce qu'**il comporte un circuit de réception et discrimination (2, 6) qui supprime des signaux de réception de plus faible, intensité de champ par rapport à un signal de réception ayant une intensité de champ de réception plus grande d'une certaine cote, en particulier de 3 à 6 dB.

11. Récepteur radioélectrique - selon l'une quelconque des revendications précédentes, **caractérisé en ce que** la valeur de seuil peut être dimensionnée de sorte qu'elle soit dépassée uniquement si l'augmentation de l'intensité de champ de réception est d'au moins de 3 à 6 dB.

12. Système de radiotransmission ayant plusieurs émetteurs radioélectriques répartis localement afin d'émettre des radiotélégrammes dans le même canal radioélectrique et ayant au moins un récepteur radioélectrique selon l'une quelconque des revendications précédentes servant à la réception des radiotélégrammes.

13. Système de radiotransmission selon la revendication 12, **caractérisé en ce qu'**il fait partie d'un système de détection de données de consommation dans lequel les émetteurs radioélectriques sont attribués aux compteurs de consommation et sont agencés pour envoyer, à des fins de réception par le récepteur radioélectrique, des radiotélégrammes ayant des données d'état de compteur en correspondance avec les données d'identification de compteur des compteurs de consommation.
